# EUROPÄISCHE PATENTSCHRIFT

(11) **EP 2 919 992 B1**
(45) Veröffentlichungstag und Bekanntmachung des Hinweises auf die Patenterteilung: **26.10.2016**
(21) Anmeldenummer: 13789317.8
(22) Anmeldetag: 12.11.2013
(51) Int. Cl.: B32B 41/00, G06K 19/077

(54) **VERFAHREN UND VORRICHTUNG ZUR HERSTELLUNG EINES MEHRLAGIGEN SICHERHEITSPRODUKTES**
METHOD AND DEVICE FOR PRODUCING A MULTI-LAYER SECURITY PRODUCT
PROCÉDÉ ET DISPOSITIF DE FABRICATION D'UN PRODUIT DE SÉCURITÉ MULTICOUCHE

(30) Priorität: 13.11.2012 DE 102012220706; 22.05.2013 EP 13168770
(43) Veröffentlichungstag der Anmeldung: 23.09.2015
(73) Patentinhaber: Bundesdruckerei GmbH, 10969 Berlin (DE)
(72) Erfinder: LEOPOLD, André, 10119 Berlin (DE); MÄRTENS, Detlef, 13599 Berlin (DE); GAHLBECK, Jeffry, 15517 Fürstenwalde (DE); SCHÜTT, Thomas, 16567 Mühlenbeck (DE); LÖWE, Reinhard, 14542 Werder OT Phöben (DE); SEIDEL, Rainer, 13467 Berlin (DE)
(74) Vertreter: Ramrath, Lukas
(86) Internationale Anmeldenummer: PCT/EP2013/073546
(87) Internationale Veröffentlichungsnummer: WO 2014/076046

(56) Entgegenhaltungen:
- EP-A1- 2 053 544
- WO-A1-01/61646
- WO-A1-2008/146179
- WO-A1-2010/089713
- DE-U1- 20 122 264

## Beschreibung

Die Erfindung betrifft ein Verfahren und eine Vorrichtung zur Herstellung eines mehrlagigen Sicherheitsproduktes, insbesondere eines Sicherheitsdokuments.

Aus dem Stand der Technik sind Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird.

Die WO 2011/003518 A1 beschreibt z.B. ein Verfahren zur Herstellung eines Inlays für einen Folienverbund, insbesondere ein Inlay für die Weiterverarbeitung zu einem Wert- oder Sicherheitsdokument, bei dem eine Trägerfolie mit mehreren darauf angeordneten und einander zugeordneten elektronischen Bauelementen einer Bilderfassungseinrichtung zugeführt wird, durch welche zumindest die Position von einem elektronischen Bauelement als Nutzen erfasst wird. Weiter wird eine auf die Trägerfolie aufzubringende lasersensitive Ausgleichsfolie zunächst einer Laserschneideinrichtung zugeführt. Weiter werden die Ausgleichsfolie mit den daran eingebrachten Aussparungen und das Trägermaterial in einer Zusammenführstation zusammengeführt und passergenau zueinander ausgerichtet zu einem Inlay fixiert. Hierbei wird mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelements auf der Trägerfolie aufgebracht.

Neben dem Inlay kann ein Sicherheitsdokument noch weitere Lagen umfassen. So beschreibt die DE 10 2009 007 552 A1 ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist. Hierbei werden eine Rollenbahn der Polymerfolie und zumindest ein Streifen mit einer n-fachen Anzahl an Nutzen einer Kaschierstation zugeführt und kaschiert. Weiter wird vor dem Kaschieren eine Steuerlinie auf der Polymerfolie abgefragt, die dem zumindest einen auf dem jeweiligen Nutzen aufzubringenden Sicherheitsmerkmal zugeordnet ist oder eine dem Nutzen oder dem Streifen zugeordnete Referenzmarke abgefragt oder die Steuerlinie und die Referenzmarke abgefragt. Weiter werden eine Zuführgeschwindigkeit oder eine Zuführrichtung oder beides von der Rollenbahn der Polymerfolie und dem Streifen zur exakten Ausrichtung zueinander angepasst.

Die DE 10 2010 033 049 A1 offenbart ein Verfahren zur Herstellung eines Laminatverbundes für ein Sicherheits- und/oder Wertdokument, enthaltend zumindest eine erste Polymerschicht, eine zweite Polymerschicht und ein zwischen die erste Polymerschicht und die zweite Polymerschicht einzulaminierendes Sicherheitsmerkmal mit den folgenden Verfahrensstufen:
a) zumindest eine Seite des Sicherheitsmerkmales oder die dem Sicherheitsmerkmal zugewandte Seite der ersten Polymerschicht wird mit einem Klebstoff beschichtet, welcher reaktiv ist,
b) die erste Polymerschicht und das Sicherheitsmerkmal werden zueinander positioniert und miteinander kontaktiert,
c) der Klebstoff wird vernetzt und
d) die erste und die zweite Polymerschicht werden unter Einschluss des Sicherheitsmerkmales unter Einwirkung von Druck sowie Erwärmung miteinander laminiert.

Die US 5,717,776 offenbart eine Kartenausgabevorrichtung. Diese umfasst Mittel zum Drucken eines Bildes eines Bewerbers, welches durch ein Fotografiermittel fotografiert wurde, auf eine erste Karte. Weiter dienen diese Mittel zum Drucken von Daten über den Bewerber, die von einer Host-Unit empfangen wurden. Weiter umfasst die Kartenausgabevorrichtung Prüfmittel zum Prüfen, ob eine Druckqualität der ersten Karte, die von dem Mittel zum Drucken gedruckt wurde, akzeptabel ist. Weiter umfasst die Kartenausgabevorrichtung ein Laminiermittel, um eine zweite Karte und die erste Karte zu laminieren, falls das Prüfmittel entschieden hat, dass die Druckqualität der ersten Karte akzeptabel ist. Die zweite Karte enthält hierbei einen Speicher, der verschieden von der ersten Karte ist.

Die US 2004/0144472 A1 offenbart ein Verfahren zur Herstellung von diskreten gedruckten laminierten Plastikprodukten aus einem Blattstapel. Hierbei ist offenbart, dass ein oder mehrere Lagen aus Plastik gedruckt werden, die zu laminieren sind.

Die WO2011/003518 offenbart ein Verfahren zur Herstellung eines Inlays für einen Folienverbund. Hierin ist offenbart, dass eine Trägerfolie mit darauf aufgebrachten elektronischen Bauelementen oder Modulen mit weiteren Folien zu einem Kartenkörper zusammengefügt und laminiert wird.

Die DE 10 2009 007 552 A1 offenbart ein Verfahren zur Herstellung von mehrlagigen Sicherheitsprodukten, bestehend aus zumindest einer Karte und zumindest einem auf zumindest einer Seite der Karte aufgebrachten Polymerfolie, welche als Rollenware bereitgestellt wird und mit zumindest einem Sicherheitsmerkmal versehen ist.

Die EP 2 053 544 A1 offenbart ein Verfahren zur Herstellung eines Hochfrequenzetiketts auf einem Gegenstand, wobei das Verfahren folgende Schritte aufweist:
- mindestens ein Transponder wird auf einer Oberfläche des Gegenstandes fixiert, wobei der Transponder mindestens einen Hochfrequenzchip sowie mindestens eine Antenne und mindestens eine Trägerfolie aufweist;
- mindestens ein Decketikett wird auf dem Transponder fixiert, wobei das Decketikett mindestens eine von dem Transponder weg weisende beschriftbare Oberfläche aufweist.

Die DE 201 22 264 U1 offenbart eine Vorrichtung zum Herstellen von Datenträgern mit integriertem Transponder, umfassend Mittel zum Zuführen einer Bahn von Etiketten; Mittel zum Zuführen einer Bahn aus aneinander grenzenden Transpondern; eine Verbindungsstation zum Schneiden und Vereinzeln der Transponder von der Transponderbahn, die die Transponder von der Bahn trennt und vereinzelt und an die Etikettenbahn einzeln übergibt, wobei die Verbindungsstation eine Walze umfasst, die die vereinzelten Transponder durch Unterdruck fixiert.

Die WO 2010/089713 A1 offenbart ein Verfahren zur Herstellung eines Objekts mit einer darauf angebrachten RFID-Einrichtung. Das Verfahren umfasst die Schritte:
- Anbringen der RFID-Einrichtung auf einer Oberfläche des Objekts;
- Übertragen eines graphischen Elements, welches auf eine Übertragungskörper aufgebracht ist, zum Objekt, nachdem die RFID-Einrichtung auf die Oberfläche aufgebracht wurde.

Mehrlagige Sicherheitsdokumente können auch eine personalisierte und/oder individualisierte Laminationslage, z.B. eine personalisierte Polymerfolie, umfassen.

Hierbei bezeichnet eine personalisierte und/oder individualisierte Laminationslage eine Lage, die personalisierte und/oder individualisierte Informationen enthält, z.B. in Form eines Lichtbildes, einer Seriennummer, einer Dokumentennummer oder eines Hologramms.

In Verfahren zur Herstellung von mehrlagigen Sicherheitsdokumenten werden verschiedene Lagen zusammengefügt und verbunden, beispielsweise durch eine Lamination. Hierbei kann es vorkommen, dass z.B. ein elektronisches Element der Inlay-Lage defekt ist. Ein diese inlay-Lage enthaltenes Sicherheitsdokument bildet Ausschuss bei der Produktion von Sicherheitsdokumenten.

In bekannten Verfahren zur Herstellung von mehrlagigen Sicherheitsdokumenten, z.B. in der DE 10 2009 007 552 A1, wird eine personalisierte und/oder individualisierte Laminationslage während des Herstellungsprozesses ungeachtet einer Funktionsfähigkeit einer Inlay-Lage in das Sicherheitsdokument eingebracht. Ein die personalisierte und/oder individualisierte Laminationslage und eine defekte Inlay-Lage enthaltenes Sicherheitsdokument stellt hierbei ebenfalls Ausschuss dar. In diesem Fall ist es jedoch notwendig, dass zur Herstellung eines neuen Sicherheitsdokuments mit einer funktionierenden Inlay-Lage eine personalisierte und/oder indivldualisierte Inlay-Lage erneut bereitgestellt wird. Dies verlängert in nachteiliger Weise eine Durrhlautzeit bzw. Produktionszeit eines Sicherheitsdokuments.

Es stellt sich das technische Problem, ein Verfahren und eine Vorrichtung zur Herstellung eines mehrlagigen Sicherheitsproduktes, insbesondere eines mehrlagigen Sicherheitsdokuments, zu schaffen, welche eine Durchlaufzeit bzw. eine Fertigungszeit bei der Herstellung von Sicherheitsprodukten verkürzen. Die Lösung des technischen Problems ergibt sich durch die Gegenstände mit den Merkmalen der Ansprüche 1 und 10. Weitere vorteilhafte Ausgestaltungen der Erfindung ergeben sich aus den Unteransprüchen.

Vorgeschlagen wird ein Verfahren zur Herstellung eines mehrlagigen oder mehrschichtigen Sicherheitsproduktes, insbesondere eines mehrlagigen Sicherheitsdokuments.

Es ist eine Grundidee des vorgeschlagenen Verfahrens, dass eine personalisierte und/oder individualisierte Laminationslage ausschließlich dann im Herstellungsprozess auf eine Inlay-Lage oder einen die Inlay-Lage beinhaltenden Lagenverbund aufgebracht wird, wenn eine Funktionsfähigkeit der Inlay-Lage, also z.B. eine Funktionsfähigkeit der elektrischen und/oder elektronischen Elemente der Inlay-Lage, gegeben ist. Es ist eine weitere Grundidee der Erfindung, dass im Falle einer nicht funktionsfähigen Inlay-Lage eine Ersatzlage auf die Inlay-Lage oder den die Inlay-Lage beinhaltenden Lagenverbund aufgebracht wird.

Als Sicherheitsdokument wird jedes Dokument bezeichnet, das eine physikalische Entität ist, die gegen ein unautorisiertes Herstellen und/oder Verfälschen durch Sicherheitsmerkmale geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar oder umfasst ein solches. Beispiele für Sicherheitsdokumente, welche auch Wertdokumente umfassen, die einen Wert repräsentieren, umfassen beispielsweise Reisepässe, Personalausweise, Führerscheine, Identitätskarten, Banknoten, Postwertzeichen, Kreditkarten, Smartcards und Etiketten. Als Smartcards werden solche Sicherheitsdokumente bezeichnet, die ein Chipmodul umfassen, welches kontaktlos Informationen mit einem Verifikationsgerät austauschen kann. Hierfür umfasst eine Smartcard neben dem Chipmodul eine hiermit gekoppelte Antenne, die in den Dokumenten- oder Kartenkörper integriert ist. Eine verwendete Datenaustauschtechnik kann z.B. die so genannte RFID-Technik (Radio-Frequency-Identification-Technik) sein. Wie nachfolgend näher erläutert, kann das Chipmodul als auch die mit dem Chipmodul gekoppelte Antenne Bestandteil einer Inlay-Lage sein.

Das vorgeschlagene Verfahren umfasst die folgenden Verfahrensschritte. In einem ersten Verfahrensschritt wird eine Inlay-Lage oder ein die Inlay-Lage beinhaltender Lagenverbund bereitgestellt. Eine Inlay-Lage bezeichnet hierbei eine Lage oder Schicht aus einem laminierfähigen Material, welche elektrische und/oder elektronische Bauelemente enthält. Die elektrischen und/oder elektronischen Bauelemente können aktive oder passive Bauelemente sein. Beispielsweise kann die Inlay-Lage Spulen, Kondensatoren, Anzeigeelemente, wie Displays, Batterien, integrierte Schaltkreise, Mikroprozessoren und/oder Speicherelemente enthalten. Insbesondere kann die Inlay-Lage einen Halbleiterchip und mit dem Halbleiterchip verbundene Antennenspulen enthalten. Diese dienen einem Datenaustausch z.B. über die vorhergehend erläuterte RFID-Technik.

Zur Herstellung einer Inlay-Lage können die elektronischen Bauelemente z.B. auf eine Trägerlage, die z.B. durch eine Trägerfolie gebildet wird, aufgebracht werden. Auch können die elektrischen oder elektronischen Bauelemente in einen Lagenverbund, z.B. einen Folienverbund, bereits einlaminiert sein.

Die Inlay-Lage bzw. der die Inlay-Lage beinhaltende Lagenverbund besteht hierbei aus einem laminierfähigen Material.

Insbesondere kann ein laminierfähiges Material ein Kunststoffmaterial sein. Als Kunststoffmaterial kommen insbesondere Derivate oder auch Kombinationen der folgenden Kunststoffe infrage: Polycarbonat (PC), insbesondere Bisphenol-A-Polycarbonat, Polyethylenterephthalat (PET), deren Derivate wie Glykol-modifiziertes PET (PET-G), Polyvinylchlorid (PVC), Acrylnitril-Butadien-Styrol (ABS), thermoplastische Elastomere (TPE), insbesondere thermoplastisches Polyurethan (TPU). Auch andere Polyurethane können eingesetzt werden. Zusätzlich können auch wärmehärtende Harze und/oder Kunststoffe oder Mehrkomponentensysteme verwendet werden.

Ein die Inlay-Lage beinhaltender Lagenverbund kann neben der Inlay-Lage eine oder mehrere weitere Lagen aus einem laminierfähigen Material beinhalten. So kann der Lagenverbund beispielsweise eine oder mehrere Drucklagen und/oder eine oder mehrere Schutzlagen enthalten. Eine Drucklage bezeichnet hierbei eine Lage, die aufgedruckte Informationen, z.B. auch Sicherheitsmerkmale, enthält.

Weiter erfolgt eine Überprüfung einer Funktionsfähigkeit der Inlay-Lage. Hierbei wird geprüft, ob ein korrekter Datenaustausch mittels der Inlay-Lage oder dem die Inlay-Lage beinhaltenden Lagenverbund möglich ist. Auch kann eine Funktionsfähigkeit mindestens eines elektrischen oder elektronischen Elements der Inlay-Lage überprüft werden. Hierbei wird z.B. getestet, ob ein Defekt eines Elements oder eine ungewünschte Abweichung von Soll-Eigenschaften, z.B. von einem Soll-Widerstand, einer Soll-Kapazität und/oder einer Soll-Induktivität, vorliegt. Hierzu kann die Inlay-Lage oder der die Inlay-Lage beinhaltende Lagenverbund mittels einer Einrichtung zur Prüfung der Funktionsfähigkeit, die z.B. in eine Fertigungsstraße integriert ist, geprüft werden.

Weiter folgt eine Aufbringung mindestens einer personalisierten und/oder individualisierten Laminationslage auf die Inlay-Lage oder den die Inlay-Lage beinhaltenden Verbund ausschließlich dann, falls die Funktionsfähigkeit gegeben ist.

Das herzustellende Sicherheitsprodukt, insbesondere Sicherheitsdokument, beinhaltet also mindestens die Inlay-Lage und eine personalisierte und/oder individualisierte Laminationslage. Die personalisierte und/oder individualisierte Laminationslage bezeichnet hierbei eine Lage aus einem laminierfähigen Material, welche das Sicherheitsprodukt individualisierende Informationen und/oder eine zur Führung des Sicherheitsdokuments autorisierte Person personalisierende Informationen enthält. Diese Informationen können z.B. als Sicherheitsmerkmale in der personalisierten und/oder individualisierten Laminationslage enthalten sein. Solche Informationen können beispielsweise ein Name, eine Dokumenten- oder Seriennummer, eine Unterschrift, ein Lichtbild oder ein Hologramm sein.

Die Informationen der personalisierten und/oder individualisierten Laminationslage können auf die Laminationslage aufgedruckt, z.B. mittels eines Inkjet-Verfahrens, und/oder eingraviert, beispielsweise mittels eines Lasergravurverfahrens, werden. Selbstverständlich sind auch andere Verfahren zur Integration der Informationen in die personalisierte und/oder individualisierte Laminationslage vorstellbar. Die Laminationslage kann beispielsweise als Einzellage, insbesondere als Einzelfolie, ausgebildet sein. Der Begriff Laminationslage umfasst hierbei auch einen die Laminationslage beinhaltenden Lagenverbund, z.B. einen Lagenverbund mit einer oder mehreren Schutzlagen. Hierbei kann es möglich sein, dass vor einer Aufbringung der Laminationslage mindestens eine Schutzlage von dem die Laminationslage beinhaltenden Lagenverbund abgezogen wird, wonach die freigelegte Laminationslage auf die Inlay-Lage oder den die Inlay-Lage beinhaltenden Lagenverbund aufgebracht wird.

Die Aufbringung der Laminationslage kann z.B. mittels Ultraschall-Heften erfolgen. Auch andere Verfahren zur Aufbringung bzw. Befestigung sind möglich. Ein beispielhaftes Verfahren zur Aufbringung der personalisierten und/oder individualisierten Laminationslage auf eine weitere Lage eines herzustellenden Sicherheitsproduktes ist in der eingangs erwähnten DE 10 2009 007 552 A1 beschrieben. Hierbei wird eine Polymerfolie, welche die Laminationslage bildet, als Rollenware bereitgestellt und mit zumindest einem Streifen mit einer n-fachen Anzahl an Nutzen einer Kaschierstation zugeführt und kaschiert. Vor dem Kaschieren wird eine Steuerlinie auf der Polymerfolie abgefragt, die dem zumindest einen auf dem jeweiligen Nutzen aufzubringenden Sicherheitsmerkmal zugeordnet ist, oder eine dem Nutzen oder dem Streifen zugeordnete Referenzmarke abgefragt oder die Steuerlinie und die Referenzmarke abgefragt. Weiter wird eine Zuführgeschwindigkeit oder eine Zuführungsrichtung oder beides von der Rollenbahn der Polymerfolie und dem Streifen zur exakten Ausrichtung zueinander angepasst. Ein solches Verfahren ermöglicht vor der Aufbringung der personalisierten und/oder individualisierten Laminationslage auf die Inlay-Lage oder den die Inlay-Lage beinhaltenden Lagenverbund, dass diese zueinander ausgerichtet werden.

Das erfindungsgemäße Verfahren ermöglicht in vorteilhafter Weise, dass eine personalisierte und/oder individualisierte Laminationslage nur dann in ein diese personalisierte und/oder individualisierte Laminationslage beinhaltendes Sicherheitsprodukt eingebracht wird, wenn eine Funktionsfähigkeit der Inlay-Lage und somit des Sicherheitsproduktes gegeben ist. Wird nämlich die personalisierte und/oder individualisierte Laminationslage auf eine defekte Inlay-Lage aufgebracht, so stellt das diese Lagen beinhaltende Sicherheitsprodukt Ausschuss des Herstellungsprozesses dar. In diesem Fall ist eine erneute Herstellung der personalisierten und/oder individualisierten Laminationslage notwendig. Dies ist zeit- und kostenintensiv, insbesondere wird eine Durchlaufzeit oder Fertigungszeit des die personalisierte und/oder individualisierte Laminationslage beinhaltenden Sicherheitsproduktes verlängert. Durch die vorgeschlagene Lösung wird die personalisierte und/oder individualisierte Laminationslage bei einer defekten Inlay-Lage nicht in das herzustellende Sicherheitsprodukt eingefügt. Zwar stellt das ohne die personalisierte und/oder individualislerte Laminationslage oder, wie nachfolgend näher erläutert, mit einer Ersatzlage hergestellte Sicherheitsprodukt weiterhin Ausschuss dar, jedoch ist keine erneute Anfertigung der personalisierte und/oder individualisierten Laminationslage notwendig. Somit wird in vorteilhafter Weise eine Fertigungszeit des Sicherheitsproduktes verringert und Produktionskosten gesenkt.

Erfindungsgemäß wird eine Ersatzlage auf die Inlay-Lage oder den die Inlay-Lage beinhaltenden Lagenverbund aufgebracht, falls die Funktionsfähigkeit nicht gegeben ist. Die Ersatzlage besteht insbesondere aus einem laminierfähigen Material. Beispielsweise kann die Ersatzlage die gleichen geometrischen Abmaße aufweisen wie die personalisierte und/oder individualisierte Laminationslage, insbesondere die gleiche Breite, die gleiche Höhe und/oder die gleiche Länge. Die Ersatzlage kann hierbei auch als Dummy-Lage bezeichnet werden. Durch Aufbringung der Ersatzlage können in vorteilhafter Weise prozesstechnische Randbedingungen und/oder Anforderungen nachfolgender Prozessschritte eingehalten werden. Hierdurch können in vorteilhafter Weise Störungen oder Ausfälle im Herstellungsprozess vermieden werden. Somit wird im Falle einer defekten Inlay-Lage der Herstellungsprozess des Sicherheitsproduktes fortgesetzt, wobei anstelle der personalisierten und/oder individualisierten Laminationslage jedoch eine Ersatzlage verwendet wird. Das die Ersatzlage beinhaltende Sicherheitsprodukt kann den gesamten Herstellungsprozess durchlaufen, bildet jedoch Ausschuss. Wesentlich hierbei ist, dass der Herstellungsprozess nicht unterbrechen oder gestört wird. Die nicht verwendete personalisierte und/oder individualisierte Laminationslage kann in diesem Fall auf die im Herstellungsprozess als nächste folgende intakte, also funktionsfähige, Inlay-Lage aufgebracht werden und muss nicht neu hergestellt werden

In einer weiteren Ausführungsform wird ein Inlay-Streifen mit einer n-fachen Anzahl von Nutzen bereitgestellt, wobei die Inlay-Lage des Sicherheitsprodukts durch einen Nutzen des Inlay-Streifens gebildet wird. Z.B. können die Inlay-Streifen bogenförmig bereitgestellt werden, wobei ein einzelner Inlay-Streifen aus dem Bogen ausgeschnitten oder ausgestanzt wird. Die Nutzen können hierbei hintereinander oder nebeneinander auf dem Inlay-Streifen angeordnet sein. Die Inlay-Streifen können hierbei flach, insbesondere mit einer vorbestimmten Dicke, ausgebildet sein. Weiter können die Inlay-Streifen z.B. auf einem Transportband transportiert werden. Hierbei ist es möglich, dass die Inlay-Streifen mit einem vorbestimmten Abstand auf das Transportband aufgelegt und transportiert werden. Ein Abstand zwischen zwei aufeinanderfolgenden Inlay-Streifen kann hierbei insbesondere derart gewählt werden, dass in Transportrichtung ein Abstand zwischen einem letzten Nutzen eines vorausgehenden Inlay-Streifens von einem ersten Nutzen eines nachfolgenden Inlay-Streifens gleich einem Abstand zwischen einzelnen Nutzen eines Inlay-Streifens ist.

Durch eine Vereinzelung zu Streifen wird ermöglicht, dass eine vereinfachte Aufbringung der Laminationslage, insbesondere einer die Laminationslage(n) beinhaltenden Laminationsfolie, z.B. einer Polymerfolie, vereinfacht wird. Selbstverständlich können auch mehrere Inlay-Streifen nebeneinander auf dem Transportband transportiert werden.

In einer weiteren Ausführungsform wird ein Laminationsband mit einer m-fachen Anzahl von Nutzen bereitgestellt, wobei die personalisierte und/oder individualisierte Laminationslage durch einen Nutzen des Laminationsbandes gebildet wird. Das Laminationsband kann insbesondere als Polymerfolie oder Polycarbonat-Folie ausgebildet sein. Die Anzahl m von Nutzen des Laminationsbandes kann hierbei größer als die Anzahl n von Nutzen des Inlay-Streifens sein. Das Laminationsband kann insbesondere als Rollenware bereitgestellt werden. Ein Abstand der Nutzen auf dem Laminationsband kann gleich einem Abstand der Nutzen auf einem Inlay-Streifen sein. Hierdurch kann in vorteilhafter Weise ein Herstellungsprozess mit dem Prinzip "rund auf flach" durchgeführt werden. Das Laminationsband kann hierbei von einer Rolle abgezogen und z.B. einer Kaschierstation zur Aufbringung des Laminationsbandes auf die Inlay-Streifen zugeführt werden. Das Aufbringen oder Aufkaschieren kann hierbei über eine Walze erfolgen. Durch diese Vorgehensweise wird, wie in der DE 10 2009 007 552 A1 beschrieben, in vorteilhafter Weise ermöglicht, dass ein in einer Transportebene zugeführter Inlay-Streifen sowohl in x-Richtung, also in Transportrichtung, als auch in y-Richtung, also quer zur Transportrichtung, zur Kaschierposition einstellbar ist und die abgezogene Rollenbahn analog einstellbar ist, sodass eine exakte Positionierung zueinander ermöglicht wird. Somit kann eine prozesstechnisch einfache Ausrichtung von Nutzen des Inlay-Streifens zu Nutzen des Laminationsbandes erfolgen.

In einer weiteren Ausführungsform wird ein Ersatzband mit einer k-Anzahl von Nutzen bereitgestellt, wobei die Ersatzlage als ein Nutzen des Ersatzbandes ausgebildet ist. Die Anzahl k von Nutzen des Ersatzbandes kann hierbei größer als die Anzahl n von Nutzen des Inlay-Streifens sein. Auch kann die Anzahl k von Nutzen gleich der Anzahl m von Nutzen des Laminationsbandes sein. Die Anzahl von Nutzen kann jedoch auch verschieden sein.

Auch das Ersatzband kann als Polymerfolie oder als Polycarbonat-Folie ausgebildet sein. Nutzen des Ersatzbandes können hierbei die gleichen geometrischen Abmaße wie Nutzen des Laminationsbandes aufweisen.

Nach Aufbringung eines Nutzens des Laminationsbandes oder des Ersatzbandes kann eine Randbeschneidung des resultierenden Streifens erfolgen.

Durch die Bereitstellung von Ersatzlagen als Nutzen eines Ersatzbandes kann, entsprechend den Ausführungen zum Laminationsband, eine einfache Ausrichtung von Ersatzband zu Inlay-Streifen erfolgen. Weiterhin ist eine einfache prozesstechnische Integration der Aufbringung von Ersatzlagen auf defekte Inlay-Lagen gewährleistet.

In einer weiteren Ausführungsform erfolgt vor oder während der Aufbringung eines Nutzens des Laminationsbandes auf ein Nutzen des Inlay-Streifens eine Vereinzelung des Nutzens des Laminationsbandes. Eine Vereinzelung kann hierbei beispielsweise durch Aus- oder Abschneiden oder Ausstanzen erfolgen. Durch die Vereinzelung wird also ein Nutzen vom Laminationsband getrennt. Aufgrund der Vereinzelung erfolgt keine kontinuierliche, sondern eine sequentielle Aufbringung von Nutzen des Laminationsbandes auf den/die Nutzen des Inlay-Streifens, wodurch anstelle eines die personalisierte und/oder individualisierte Laminationslage bildenden Nutzens auch ein die Ersatzlage bildendes Nutzen aufgebracht werden kann. Insbesondere kann eine Kaschierstation zur Aufbringung des die Ersatzlage bildenden Nutzens in Transportrichtung hinter einer Kaschierstation zur Aufbringung des die personalisierte und/oder individualisierte Laminationslage bildenden Nutzens angeordnet sein. Durch die Vereinzelung ergibt sich in vorteilhafter Weise, dass ein Nutzen des Laminationsbandes oder des Ersatzbandes selektiv auf einen Nutzen des Inlay-Streifens aufgebracht werden kann. Das Aufbringen eines vereinzelten Nutzens des Laminationsbandes oder des Ersatzbandes kann hierbei insbesondere mittels Ultraschall-Heften erfolgen.

In einer bevorzugten Ausführungsform wird eine erste personalisierte und/oder individualisierte Laminationslage und eine weitere personalisierte und/oder individualisierte Laminationslage auf die Inlay-Lage oder den die Inlay-Lage beinhaltenden Lagenverbund ausschließlich dann aufgebracht, falls die Funktionsfähigkeit gegeben ist. Hierbei ist die erste personalisierte und/oder individualisierte Laminationslage als bedruckte Laminationslage ausgebildet. Insbesondere kann die bedruckte Laminationslage mittels eines Inkjet-Verfahrens bedruckt sein und beispielsweise ein Lichtbild und/oder eine Dokumenten- oder Seriennummer des Sicherheitsproduktes aufweisen. Die bedruckte Laminationslage kann hierbei insbesondere aus Polycarbonat bestehen.

Die weitere personalisierte und/oder individualisierte Laminationslage ist als laminierfähiger Hologrammlagenverbund ausgebildet. Hierbei enthält ein Hologrammlagenverbund mindestens eine Lage oder Schicht, die ein Hologramm enthält oder in die, z.B. durch ein geeignetes Belichtungsverfahren, ein Hologramm eingebracht oder eingefügt werden kann. Eine derartige Lage oder Schicht kann beispielsweise eine Silberhalogenidlage, eine Dichromat-Gelatine-Lage oder, vorzugsweise, eine Photopolymer-Lage sein. Hierdurch ergibt sich in vorteilhafter Weise, dass eine das Hologramm enthaltende Lage nicht wie bisher üblich nach einer Lamination aufgeklebt werden muss, sondern bereits durch die Lamination in das Sicherheitsprodukt integriert werden kann.

Eine Photopolymer-Lage kann, insbesondere in Alleinstellung, nicht laminierfähig sein. Dies bedeutet, dass sich eine in einen zu laminierenden Lagenverbund eingebrachte Photopolymer-Lage bei der Lamination nicht mit den weiteren Lagen verbinden kann. Somit ist es nicht möglich, eine Photopolymer-Lage in Alleinstellung während der Herstellung des Sicherheitsproduktes auf weitere Lagen aufzubringen und dann eine Lamination durchzuführen.

Daher wird auch ein Verfahren zur Herstellung eines laminierfähigen Hologrammlagenverbundes, insbesondere eines laminierfähigen Photopolymer-Lagenverbundes, vorgeschlagen. Hierbei wird in einem ersten Verfahrensschritt ein zumindest einseitig unbeschichteter Hologrammkörper, insbesondere ein Photopolymerkörper, bereitgestellt. Hiernach erfolgt eine Aufbringung eines Klebstoffes, insbesondere eines reaktiven Klebstoffes, auf zumindest einen Teil einer Oberfläche der unbeschichteten Seite des Hologrammkörpers. Das Aufbringen kann hierbei beispielsweise durch Beschichten, Gießen oder Aufrakeln erfolgen. Der Klebstoff kann hierbei ein UV (Ultra-Violett)-Klebstoff und/oder ein Klebstoff zur thermischen Vernetzung sein. Weiter erfolgt eine Bereitstellung mindestens eines Laminationskörpers. Der Laminationskörper besteht aus einem laminierfähigen Material. Insbesondere kann der Laminationskörper als Polycarbonat bestehen. Selbstverständlich kann der Laminationskörper aber auch aus einem oder mehreren der vorhergehend erläuterten Kunststoffmaterialien bestehen. Weiter erfolgt eine Aufbringung des mindestens einen Laminationskörpers auf die mit Klebstoff beschichtete Oberfläche des Hologrammkörpers und ein Verkleben des Laminationskörpers mit dem Hologrammkörper. Vor der Aufbringung des Laminationskörpers kann hierbei eine Ausrichtung des Hologrammkörpers zum Laminationskörper erfolgen.

Reaktive Klebstoffe sind solche, bei welchen eine Vernetzung eines Grundpolymers unter Vernetzungsbedingungen erfolgt. Diese unterscheiden sich von den rein thermoplastischen Klebstoffen, wie beispielsweise Schmelzkleber, dadurch, dass der Klebstoff Polymere, Substanzen oder chemische Gruppen enthält, die miteinander zu reagieren vermögen, wobei durch diese Reaktion eine Erhöhung des Molekulargewichtes des Grundpolymers um zumindest den Faktor 2, meist 10 und mehr, erfolgt. Bei den Schmelzklebern erfolgt eine solche Molekulargewichtserhöhung dagegen nicht. Als reaktive Klebstoffe sind grundsätzlich verschiedenste Systeme einsetzbar. Infrage kommen einerseits Einkomponentensysteme, also fertig gemischte Zubereitungen, mit je nach Bedarf unterschiedlich langen Topfzeiten. Hierunter fallen wärmevernetzbare Systeme mit einem Grundpolymer und einem wärmeaktivierten Vernetzer. Dies umfasst Epoxide, Urethane, Polyester und Polyimide. Hierunter fallen des Weiteren strahlungsvernetzbare Systeme, welche meist auf Acrylbasis aufgebaut sind. Schließlich umfasst dies Systeme, die durch Feuchtigkeit vernetzen, worunter Cyanacrylate und Urethane fallen. Infrage kommen aber ebenso Zweikomponentensysteme, bei welchen Grundpolymer und Vernetzungsmittel erst kurz vor der Erzeugung der Klebstoffschicht miteinander gemischt werden und die Vernetzung ohne die Notwendigkeit der Zufuhr von Wärme oder Strahlung erfolgt. Hierbei handelt es sich meist um Acrylate, Urethane,

Polyester und Epoxide. Bevorzugt sind aufgrund der einfacheren Verarbeitung Einkomponentensysteme.

Alternativ ist es selbstverständlich möglich, den Klebstoff auf zumindest einen Teil einer Oberfläche des Laminationskörpers aufzubringen, insbesondere auf einen Teil, der auf die unbeschichtete Oberfläche des Hologrammkörpers aufgebracht wird. Der Hologrammkörper, insbesondere der Photopolymerkörper, kann als Hologrammfolie, insbesondere als Photopolymerfolie, ausgebildet sein. Auch der Laminationskörper kann folienartig, z.B. als Polycarbonatfolie, ausgebildet sein.

Weiter ist möglich, dass der zumindest einseitig unbeschichtete Hologrammkörper bereitgestellt wird, indem mindestens eine Deckschicht eines Verbundes entfernt wird, wobei der Verbund den Hologrammkörper, insbesondere die Hologrammschicht, und die mindestens eine Deckschicht aufweist. Auch ist möglich, dass ein zweiseitig unbeschichteter Hologrammkörper bereitgestellt wird, wobei ein Klebstoff auf zumindest einen Teil einer Oberfläche einer ersten Seite des Hologrammkörpers und auf zumindest einen Teil einer Oberfläche einer zweiten Seite des Hologrammkörpers aufgebracht wird. Hiernach kann ein erster und ein weiterer Laminationskörper bereitgestellt werden, wobei der erste Laminationskörper auf die Oberfläche der ersten Seite des Hologrammkörpers und der weitere Laminationskörper auf die Oberfläche der zweiten Seite des Hologrammkörpers aufgebracht wird und mit dem Hologrammkörper verklebt werden. Selbstverständlich kann alternativ der Klebstoff auch auf den ersten und den weiteren Laminationskörper aufgebracht werden. Ein nur einseitig mit einem Laminationskörper verklebter Hologrammkörper kann z.B. als äußere Lage eines mehrlagigen Sicherheitsproduktes verwendet werden. Bei einer beidseitigen Aufbringung eines Laminationskörpers auf den Hologrammkörper kann in vorteilhafter Weise dieser entstehende Hologrammlagenverbund eine innere Lage eines mehrlagigen Sicherheitsproduktes bilden.

In einer weiteren Ausführungsform wird nach der Aufbringung der mindestens einen personalisierten und/oder individualisierten Laminationslage oder der mindestens einen Ersatzlage der entstehende Lagenverbund laminiert. Selbstverständlich können nach der Aufbringung der mindestens einen personalisierten und/oder individualisierten Laminationslage oder der mindestens einen Ersatzlage weitere Lagen aufgebracht werden. Nach der Lamination entsteht ein Laminat oder Laminatverbund, der das Sicherheitsprodukt ausbildet. Selbstverständlich ist es möglich, dass der Laminatverbund nach der Lamination noch mit einer Schutzschicht, die z.B. auflackiert wird, versehen werden kann. Ein die Ersatzlage beinhaltender Laminatverbund bildet hierbei Ausschuss. Durch die Einbringung der Ersatzlage kann der Fertigungsprozess trotz einer defekten Inlay-Lage, insbesondere auch die Lamination, durchgeführt werden, wodurch der Herstellungsprozess nicht unterbrochen wird. Eine Aussortierung von Ausschuss erfolgt hierbei nach der Lamination.

In einer weiteren Ausführungsform wird ein Endnutzen, also z.B. das herzustellende Sicherheitsprodukt, auf ein Endformat aus dem nach der Ausbringung der mindestens einen personalisierte und/oder individualisierten Laminationslage oder der mindestens einen Ersatzlage entstehenden unlaminierten oder laminierten Lagenverbund ausgestanzt. In diesem Fall kann nach dieser Vereinzelung durch Ausstanzen Ausschuss, insbesondere ein Nutzen mit einer defekten Inlay-Lage, aussortiert werden. Wie vorhergehend angeführt, ergibt sich hierdurch in vorteilhafter Weise, dass ein Herstellungsprozess, der auch das vorhergehend erläuterte Ausstanzen eines Endnutzens umfasst, nicht unterbrochen werden muss.

Selbstverständlich kann im Herstellungsprozess eine zusätzliche Qualitätskontrolle und/oder eine Aufbringung einer Kratz- oder Abriebsschutzbeschichtung erfolgen.

Weiter vorgeschlagen wird eine Vorrichtung zur Herstellung eines mehrlagigen Sicherheitsproduktes, insbesondere eines mehrlagigen Sicherheitsdokumentes. Die Vorrichtung kann hierbei insbesondere als Fertigungsstraße ausgebildet sein. Das herzustellende Sicherheitsprodukt besteht aus mindestens einer Inlay-Lage und mindestens einer personalisierte und/oder individualisierten Laminationslage. Die Vorrichtung umfasst mindestens eine Einrichtung zur Bereitstellung einer Inlay-Lage oder eines die Inlay-Lage beinhaltenden Lagenverbundes und mindestens eine Einrichtung zur Aufbringung einer personalisierten und/oder individualisierten Laminationslage. Weiter kann die Vorrichtung mindestens eine Steuereinrichtung umfassen.

Weiter weist die Vorrichtung mindestens eine Einrichtung zur Prüfung einer Funktionsfähigkeit der Inlay-Lage, insbesondere mindestens eines elektrischen und/oder elektronischen Elements der Inlay-Lage, auf. Die Einrichtung zur Prüfung ist hierbei derart mit der Einrichtung zur Aufbringung verbunden, dass die mindestens eine personalisierte und/oder individualisierte Laminationslage ausschließlich dann auf die Inlay-Lage oder den die Inlay-Lage beinhaltenden Lagenverbund aufbringbar ist, falls die Funktionsfähigkeit gegeben ist. Hierzu kann die Einrichtung zur Aufbringung derart mechanisch, elektrisch und/oder signaltechnisch mit der Einrichtung zur Prüfung verbunden oder gekoppelt sein, dass die mindestens eine personalisierte und/oder individualisierte Laminationslage ausschließlich dann auf die Inlay-Lage oder den die Inlay-Lage beinhaltenden Lagenverbund aufbringbar ist, falls die Funktionsfähigkeit gegeben ist.

Die Einrichtung zur Aufbringung der personalisierten und/oder individualisierten Laminationslage kann auch mittels der Steuereinrichtung derart steuerbar ein, dass die mindestens eine personalisierte und/oder individualisierte Laminationslage ausschließlich dann auf die Inlay-Lage oder den die Inlay-Lage beinhaltenden Lagenverbund aufbringbar ist, falls die Funktionsfähigkeit gegeben ist. Hierzu kann die Steuereinrichtung daten- oder signaltechnisch mit den Einrichtungen zur Aufbringung und der Einrichtung zur Prüfung verbunden sein. Weiter kann die Vorrichtung ein Transportband umfassen. Die Einrichtung zur Aufbringung kann auch als Kaschierstation bezeichnet werden.

Die Erfindung wird anhand eines Ausführungsbeispiels näher erläutert. Die Fig. zeigen:
- Fig. 1: eine perspektivische Ansicht eines Sicherheitsproduktes,
- Fig. 2: eine Draufsicht auf ein Transportband, welches Inlay-Streifen mit mehreren Nutzen transportiert,
- Fig. 3: eine Draufsicht auf ein Laminationsband mit mehreren Nutzen und
- Fig. 4: eine schematische Darstellung einer Vorrichtung zur Herstellung eines mehrlagigen Sicherheitsproduktes.

Nachfolgend bezeichnen gleiche Bezugszeichen Elemente mit gleichen oder ähnlichen technischen Eigenschaften.

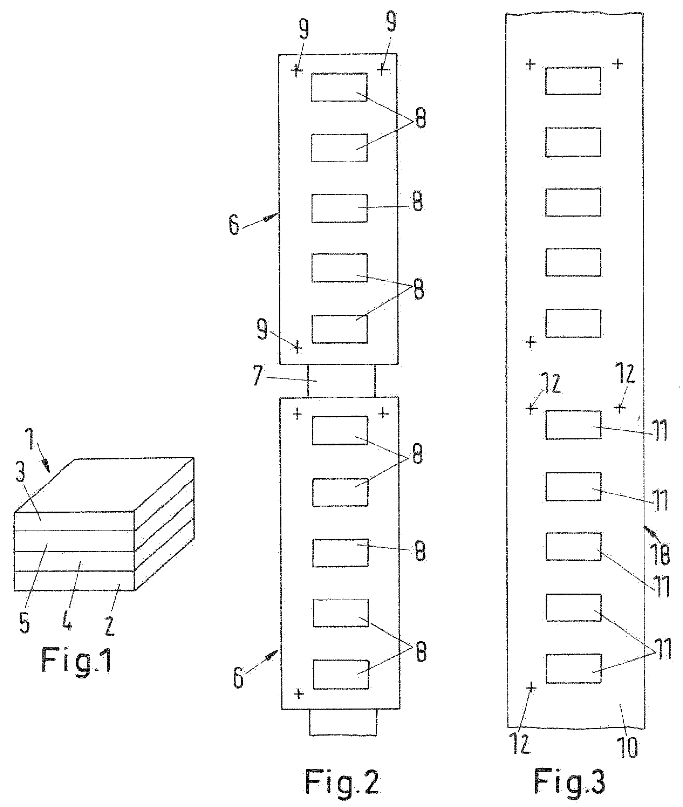

In Fig. 1 ist eine perspektivische Ansicht auf ein Sicherheitsprodukt 1 dargestellt, welches eine untere Decklage 2, eine obere Decklage 3, eine Inlay-Lage 4 und eine personalisierte Laminationslage 5 beinhaltet. Das dargestellte Sicherheitsprodukt 1 kann auch als Endnutzen bezeichnet werden, wobei das Endnutzen als Personalausweis, Reisepass, Identifikationskarte, Zugangsberechtigung, Führerschein, Personalisierungsdatenseite eines buchartigen Wertdokuments oder dergleichen eingesetzt werden kann. Ein solches Endnutzen kann auch Sicherheitsmerkmale enthalten.

In Fig. 2 ist eine Draufsicht auf zwei Inlay-Streifen 6 dargestellt, die auf einem Transportband 7 angeordnet sind. In einem nicht näher dargestellten Bogen, insbesondere einem Bogenlaminat, sind mehrere Nutzen 8 hintereinander und nebeneinander enthalten. Aus diesem Bogen werden die Inlay-Streifen 6 ausgeschnitten, welche beispielsweise fünf Nutzen 8 umfassen. Die Nutzen 8 sind bevorzugt in einem vorbestimmten, insbesondere im gleichen, Abstand zueinander in einer Reihe hintereinander angeordnet und können sowohl im Längsformat als auch im Querformat hintereinander positioniert sein. Ein einzelner Nutzen 8 bildet hierbei die in Fig. 1 dargestellte Inlay-Lage 4 des Sicherheitsproduktes 1. Die Inlay-Streifen 6 werden auf das Transportband 7 aufgelegt und z.B. miteinander verbunden, sodass eine Endlosbahn von hintereinander angeordneten Inlay-Streifen 6 auf dem Transportband 7 transportiert wird. Bei diesem Transportband 7 kann es sich um eine Folie oder dergleichen handeln, welche sicherstellt, dass ein Abstand zwischen den einzelnen Inlay-Streifen 6 trotz möglicher Spannungen während des Transportes aufrechterhalten bleibt. In Fig. 2 ist dargestellt, dass benachbarte Inlay-Streifen 6 in Transportrichtung beabstandet sind. Es ist jedoch auch möglich, dass die benachbarten Inlay-Streifen 6 unmittelbar aneinander anliegen. Auch können die Inlay-Streifen 6 nach dem Aufbringen auf das Transportband 7, miteinander flexibel verbunden werden, z.B. durch Klebeelemente. Eine Anpassung des Abstandes der einzelnen Inlay-Streifen 6 kann in allen Fällen z.B. durch ein Greifersystem erfolgen, das die miteinander verbundenen Inlay-Streifen 6 transportiert und individuell positioniert. Auf einem Inlay-Streifen 6 ist zumindest eine Referenzmarke 9 vorgesehen. Bevorzugt sind drei als Passermarken ausgebildete Referenzmarken 9 aufgebracht, um die Lage des Inlay-Streifens 6, z.B. optisch, erfassen zu können und hinsichtlich einer Transportrichtung (x-Richtung) und/oder in einer Richtung (y-Richtung) quer zur Transportrichtung vor einem Kaschierprozess mit der in Fig. 3 dargestellten Laminationsfolie 10 ausrichten zu können.

Alternativ zu der vorbeschriebenen Positionierung der Inlay-Streifen 6 hintereinander auf dem Transportband 7 kann vorgesehen sein, dass diese Inlay-Streifen 6 unmittelbar auf das Transportband 7 aufgelegt werden und während dem Auflegen der einzelnen Inlay-Streifen 6 hintereinander die analoge Ausrichtung der Inlay-Streifen 6 zueinander wie beim Aufbringen, das vorhergehend erläutert wurde, erfolgt. Auch kann das Transportband 7 als Vakuumband ausgebildet und insbesondere als Endlosband vorgesehen sein.

In Fig. 3 ist eine Draufsicht auf eine als Laminationsfolie 10 ausgebildetes Laminationsband dargestellt, welche Nutzen 11 enthält. Ein einzelner Nutzen 11 der Laminationsfolie 10 bildet die in Fig. 1 dargestellte personalisierte Laminationslage 5 des Sicherheitsproduktes 1. Z.B. kann auf die Nutzen 11 ein Lichtbild, eine Seriennummer und ein Name aufgedruckt sein. Diese können gleichzeitig Sicherheitsmerkmale darstellen, wobei die Nutzen 11 selbstverständlich auch weitere Sicherheitsmerkmale enthalten können. Bevorzugt ist vorgesehen, dass ein Abstand zwischen Nutzen 11 der Laminationsfolie 10 gleich einem Abstand der Nutzen 8 eines Inlay-Streifens 6 ist. Die Laminationsfolie 10 kann zusätzlich Referenzmarken 12 aufweisen, die in der Anordnung mit den Referenzmarken 9 der Inlay-Streifen 6 übereinstimmen. Diese jeweiligen Referenzmarken 9, 12 bzw. Passermarken können zumindest vor einem Kaschierprozess jeweils optisch erfasst werden, wodurch ermöglicht ist, dass die Laminationsfolie in x-Richtung, also in Transportrichtung, als auch in y-Richtung, also quer zur Transportrichtung, ausgerichtet wird und auf die Zuführungsposition der Inlay-Streifen 6 angepasst werden kann. Somit kann eine lagerichtige Anordnung von Nutzen 11, insbesondere von in dem Nutzen 11 enthaltenen Sicherheitsmerkmalen, gegeben sein.

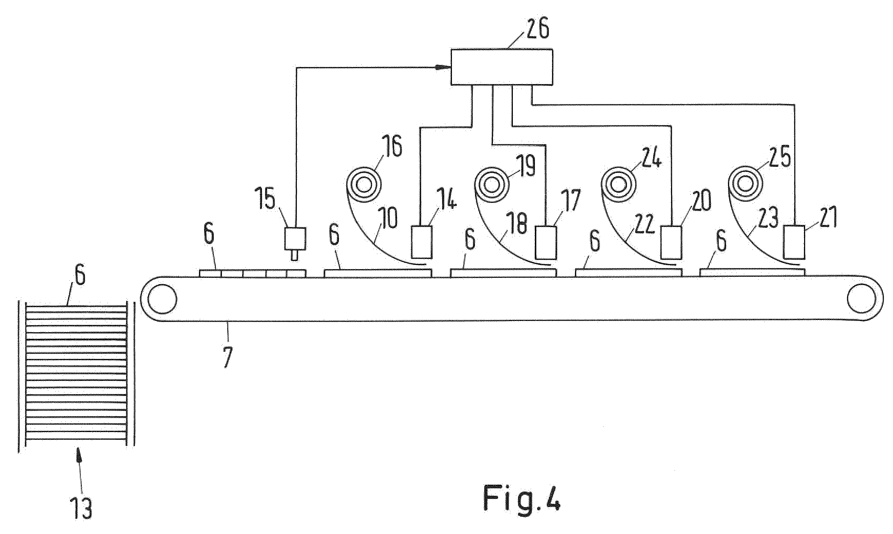

In Fig. 4 ist eine Vorrichtung zur Herstellung eines Sicherheitsproduktes 1 (siehe Fig. 1) dargestellt, mittels derer das vorhergehend erläuterte Verfahren zur Herstellung des mehrlagigen Sicherheitsproduktes 1 durchführbar ist. Einzelne Inlay-Streifen 6 werden in einem Speicher 13 gestapelt für eine Kaschierung bereitgestellt. Anschließend erfolgt in einer Übergabestation ein Auflegen der Inlay-Streifen 6 auf ein Transportband 7, welches z.B. als Vakuumband ausgestaltet sein kann. Das Transportband 7 ist hierbei als Endlosband ausgebildet. Dazu werden die Inlay-Streifen 6 einzeln aus dem Stapel 13 abgenommen und positioniert, z.B. mittels eines Greifersystems. Die Nutzen 8 auf dem jeweiligen Inlay-Streifen 6 bilden, wie vorhergehend erläutert, jeweils eine Inlay-Lage 4 des herzustellenden Sicherheitsproduktes 1. Die Inlay-Streifen 6 werden nacheinander über das Transportband 7 einer ersten Kaschierstation 14 zugeführt. In Transportrichtung vor der ersten Kaschierstation 14 ist eine Prüfstation 15 angeordnet. Die Prüfstation 15 überprüft eine Funktionsfähigkeit mindestens eines elektrischen oder elektronischen Elements (nicht dargestellt) der Inlay-Lage 4, die durch die Nutzen 8 der Inlay-Streifen 6 gebildet werden. Die erste Kaschierstation 14 bildet eine Einrichtung zur Aufbringung von Nutzen 11 eines Laminationsbandes 10, welche eine personalisierte Laminationslage 5 (siehe Fig. 1) des Sicherheitsproduktes 1 bilden. Das Laminationsband 10 ist als Rollenware bereitgestellt und wird von einer Rolle 16 abgewickelt. Vor der Aufbringung kann eine nicht dargestellte Deckschicht oder Schutzschicht von dem Laminationsband 10 entfernt werden. Hierbei wird ein Nutzen 11 des Laminationsbandes 10 vor der Aufbringung auf ein Nutzen 8 eines Inlay-Streifens 6 vereinzelt. Eine Aufbringung eines Nutzens 11 auf einen Nutzen 8 des Inlay-Streifens 6 erfolgt jedoch nur dann, wenn eine Funktionsfähigkeit der elektrischen oder elektronischen Elemente des Nutzens 8 gegeben ist. Andernfalls erfolgt keine Aufbringung eines Nutzes 11 und der Inlay-Streifen 6 wird unbestückt in Transportrichtung an der ersten Kaschierstation 14 vorbeigeführt. Eine zweite Kaschierstation 17 bildet eine Einrichtung zur Aufbringung eines Nutzes eines Ersatzbandes 18, welches aus laminierfähigem Material und als Rollenware bereitgestellt wird. Hierbei ist das Ersatzband 18 auf eine Rolle 19 aufgewickelt. Ein nicht dargestelltes Nutzen (Ersatznutzen) des Ersatzbandes 18 wird auf einen Nutzen 8 des Inlay-Streifens 6 aufgebracht, falls eine Funktionsfähigkeit von elektrischen und elektronischen Elementen des Nutzens 8 nicht gegeben ist.

Weiter dargestellt sind eine dritte Kaschierstation 20 und eine vierte Kaschierstation 21. Hierbei ist die dritte Kaschierstation 20 eine Einrichtung zur Aufbringung eines nicht dargestellten Nutzens eines weiteren Laminationsbandes 22, wobei ein einzelner Nutzen des weiteren Laminationsbandes 22 einen laminierfähigen Hologrammlagenverbund bildet. Dieser laminierfähige Hologrammlagenverbund stellt ebenfalls eine personalisierte Laminationslage dar und enthält eine Photopolymerschicht, welche wiederum ein personalisiertes Hologramm enthält. Ein Nutzen des weiteren Laminationsbandes 22 wird ebenfalls nur dann auf einen Nutzen 8 eines Inlay-Streifens 6 bzw. auf einen Nutzen 11, der von der ersten Kaschierstation 14 aufgebracht wurde, aufgebracht, falls die Funktionsfähigkeit des entsprechenden Nutzens 8 gegeben ist. Andernfalls wird ein nicht dargestellter Nutzen eines weiteren Ersatzbandes 23 von der vierten Kaschierstation 21 auf den defekten Nutzen 8 eines Inlay-Streifens 6 bzw. einen von der zweiten Kaschierstation 17 aufgebrachten Ersatznutzen aufgebracht. Das weitere Laminationsband 22 und das weitere Ersatzband 23 sind hierbei auf Rollen 24, 25 aufgewickelt.

Weiter dargestellt ist eine Steuereinrichtung 26, die datentechnisch mit der Einrichtung 15 zur Prüfung und den Kaschierstationen 14, 17, 20, 21 verbunden ist. Mittels der Steuereinrichtung 26 ist die Aufbringung der Nutzen 11 bzw. der Ersatznutzen derart steuerbar, dass eine personalisierte Laminationslage 5 ausschließlich dann auf eine Inlay-Lage 4 aufbringbar ist, falls die Funktionsfähigkeit der Inlay-Lage 4 gegeben ist.

### Bezugszeichenliste

- 1: Sicherheitsprodukt
- 2: untere Decklage
- 3: obere Decklage
- 4: Inlay-Lage
- 5: Laminationslage
- 6: Inlay-Streifen
- 7: Transportband
- 8: Nutzen
- 9: Referenzmarke
- 10: Laminationsfolie
- 11: Nutzen
- 12: Referenzmarke
- 13: Speicher
- 14: erste Kaschierstation
- 15: Prüfstation
- 16: Rolle
- 17: zweite Kaschierstation
- 18: Ersatzband
- 19: Rolle
- 20: dritte Kaschierstation
- 21: vierte Kaschierstation
- 22: weiteres Laminationsband
- 23: weiteres Ersatzband
- 24: Rolle
- 25: Rolle
- 26: Steuereinrichtung

## Patentansprüche

1. Verfahren zur Verstellung eines mehrlagigen Sicherheitsproduktes (1), umfassend die Verfahrensschritte
- Bereitstellung einer Inlay-Lage (4) oder eines die Inlay-Lage (4) beinhaltenden Lagenverbundes,
- Überprüfung einer Funktionsfähigkeit der Inlay-Lage (4),
- Aufbringung mindestens einer personalisierte und/oder Individualisierten Laminationslage (5) auf die Inlay-Lage (4) oder den die Inlay-Lage (4) beinhaltenden Lagenverbund ausschließlich dann, falls die Funktionsfähigkeit gegeben ist **dadurch gekennzeichnet, dass**
eine Ersatzlage auf die Inlay-Lage (4) oder den die Inlay-Lage (4) beinhaltenden Lagenverbund aufgebracht wird, falls die Funktionsfähigkeit nicht gegeben ist.

2. Verfahren nach Anspruch 1, **dadurch gekennzeichnet, dass** ein Inlay-Streifen (6) mit einer n-fachen Anzahl von Nutzen (8) bereitgestellt wird, wobei die Inlay-Lage (4) des Sicherheitsprodukts (1) durch einen Nutzen (8) des Inlay-Streifens (6) gebildet wird.

3. Verfahren nach einem der vorangegangenen Ansprüche, **dadurch gekennzeichnet, dass** ein Laminationsband (10, 22) mit einer m-fachen Anzahl von Nutzen (11) bereitgestellt wird, wobei die personalisierte und/oder individualisierte Laminationslage (5) durch einen Nutzen des Laminationsbandes (10, 22) gebildet wird.

4. Verfahren nach einem der Ansprüche 1 bis 3, **dadurch gekennzeichnet, dass** ein Ersatzband (18, 23) mit einer k-fachen Anzahl von Nutzen bereitgestellt wird, wobei die Ersatzlage als ein Nutzen des Ersatzbandes (18, 23) ausgebildet ist.

5. Verfahren nach dem Anspruch 3, **dadurch gekennzeichnet, dass** vor oder während der Aufbringung eines Nutzens (11) des Laminationsbandes (10, 22) auf ein Nutzen (8) des Inlay-Streifens (6) eine Vereinzelung des Nutzens (11) des Laminationsbandes (10, 22) erfolgt.

6. Verfahren nach dem Anspruch 4, dadurch gekenntzeichnet, dass während der Aufbringung eines Nutzens des Ersatzbandes (18, 23) auf ein Nutzen (8) des Inlay-Streifens (6) eine Vereinzelung des Nutzens des Ersatzbandes (18, 23) erfolgt.

7. Verfahren nach einem der Ansprüche 1 bis 6, **dadurch gekennzeichnet, dass** eine erste personalisierte und/oder individualisierte Laminationslage (5) und eine weitere personalisierte und/oder individualisierte Laminationslage auf die Inlay-Lage (4) oder den die inlay-Lage (4) beinhaltenden Verbund ausschließlich dann aufgebracht wird, falls die Funktionsfähigkeit der Inlay-Lage (4) gegeben ist, wobei die erste personalisierte und/oder individualisierte Laminationslage (5) als bedruckte Laminationslage und die weitere personalisierte und/oder individualisierte Laminationslage als laminierfähigen Hologrammlagenverbund ausgebildet ist.

8. Verfahren nach einem der vorangegangenen Ansprüche, **dadurch gekennzeichnet, dass** der nach der Aufbringung der mindestens einen personalisierte und/oder individualisierten Laminationslage (5) oder der mindestens einen Ersatzlage entstehende Lagenverbund laminiert wird.

9. Verfahren nach einem der vorangegangenen Ansprüche, **dadurch gekennzeichnet, dass** ein Endnutzen auf ein Endformat aus dem nach der Aufbringung der mindestens einen Laminationslage (5) oder der mindestens einen Ersatzlage entstehenden unlaminierten oder laminierten Lagenverbund ausgestanzt wird.

10. Vorrichtung zur Herstellung eines mehrlagigen Sicherheitsproduktes (1), wobei die Vorrichtung mindestens eine Einrichtung zur Bereitstellung einer Inlay-Lage (4) oder eines die Inlay-Lage (4) beinhaltenden Lagenverbundes und mindestens eine Einrichtung zur Aufbringung einer personalisierten und/oder individualisierten Laminationslage (5) aufweist,
wobei
die Vorrichtung mindestens eine Einrichtung (15) zur Prüfung einer Funktionsfähigkeit der Inlay-Lage (4) aufweist, wobei die Einrichtung zur Aufbringung der personalisierte und/oder individualisierten Laminationslage (5) derart mit der Einrichtung (15) zur Prüfung verbunden ist, dass die mindestens eine personalisierte und/oder individualisierte Laminationslage (5) ausschließlich dann auf die Inlay-Lage (4) oder den die Inlay-Lage (4) beinhaltenden Lagenverbund aufbringbar ist, falls die Funktionsfähigkeit gegeben ist,
**dadurch gekennzeichnet, dass**
eine Ersatzlage auf die Inlay-Lage (4) oder den die Inlay-Lage (4) beinhaltenden Lagenverbund aufbringbar ist, falls die Funktionsfähigkeit nicht gegeben ist

## Claims

1. Method for manufacturing a multi-layer security product (1), comprising the steps of:
- preparing an inlay layer (4) or a layer composite containing the inlay layer (4),
- checking a function capability of the inlay layer (4),
- applying at least one personalised and/or individualised lamination layer (5) onto the inlay layer (4), or the layer composite containing the inlay layer (4), only and exclusively if the functional capability is present,
**characterised in that**
- a replacement layer is applied onto the inlay layer (4), or onto the layer composite containing the inlay layer, in the event of the functional capability not being present.

2. Method according to claim 1, **characterised in that** an inlay strip (6) with an n-fold number of blanks (8) is provided, wherein the inlay layer (4) of the security product (1) is formed by a blank (8) of the inlay strip (6).

3. Method according to any one of the preceding claims, **characterised in that** a lamination strip (10, 22) with an m-fold number of blanks (11) is provided, wherein the personalised and/or individualised lamination layer (5) is formed by a blank of the lamination strip (10, 22).

4. Method according to any one of claims 1 to 3, **characterised in that** a replacement strip (18, 23) with a k-fold number of blanks is provided, wherein the replacement layer is formed as a blank of the replacement strip (18, 23).

5. Method according to claim 3, **characterised in that**, before or during the application of the blank (11) of the lamination strip (10, 22) onto a blank (8) of the inlay strip (6), a separation of the blank (11) of the lamination strip (10, 22) takes place.

6. Method according to claim 4, **characterised in that**, during the application of a blank of the replacement strip (18, 23) onto a blank (8) of the inlay strip (6), a separation of the blank of the replacement strip (18, 23) takes place.

7. Method according to any one of claims 1 to 6, **characterised in that** a first personalised and/or individualised lamination layer (5) and a further personalised and/or individualised lamination layer are applied onto the inlay layer (4) or onto the composite containing the inlay layer (4) only and exclusively if the function capability of the inlay layer (4) is present, wherein the first personalised and/or individualised lamination layer (5) is formed as a printed lamination layer and the further personalised and/or individualised lamination layer is formed as a hologram layer composite which is capable of being laminated.

8. Method according to any one of the preceding claims, **characterised in that** the layer composite which comes into being after the application of the at least one personalised and/or individualised lamination layer (5), or the at least one replacement layer, is laminated.

9. Method according to any one of the preceding claims, **characterised in that** an end blank is punched onto an end format, out of the unlaminated or laminated layer composite which comes into being after the application of the at least one lamination layer (5) or the at least one replacement layer.

10. Device for the manufacture of a multi-layer security product (1), wherein the device comprises at least one facility for the provision of an inlay layer (4) or of a layer composite containing the inlay layer (4), and at least one facility for the application of personalised and/or individualised lamination layer (5), wherein
the device comprises at least one facility (15) for the checking of a functional capability of the inlay layer (4), wherein the facility for the application of personalised and/or individualised lamination layer (5) is connected to the facility (15) for checking in such a way that the at least one personalised and/or individualised lamination layer (5) can be applied onto the inlay layer (4) or the layer composite containing the inlay layer (4) only and exclusively if the function capability is present,
**characterised in that**
a replacement layer can be applied onto the inlay layer (4) or onto the layer composite containing the inlay layer (4) in the event of the function capability not being present.

## Revendications

1. Procédé servant à fabriquer un produit de sécurité (1) multicouche, comprenant les étapes de procédé qui suivent consistant à :
- fournir une couche d'incrustation (4) ou un composite de couches contenant la couche d'incrustation (4) ;
- vérifier une capacité de fonctionnement de la couche d'incrustation (4) ;
- mettre en place au moins une couche stratifiée (5) personnalisée et/ou individualisée sur la couche d'incrustation (4) ou sur le composite de couches contenant la couche d'incrustation (4) exclusivement lorsque la capacité de fonctionnement est de mise,
**caractérisé en ce**
**qu'**une couche de substitution est mise en place sur la couche d'incrustation (4) ou sur le composite de couches contenant la couche d'incrustation (4) lorsque la capacité de fonctionnement n'est pas de mise.

2. Procédé selon la revendication 1, **caractérisé en ce qu'**une bande d'incrustation (6) est fournie avec un nombre multiple de n de découpes (8), sachant que la couche d'incrustation (4) du produit de sécurité (1) est formée par une découpe (8) de la bande d'incrustation (6).

3. Procédé selon l'une quelconque des revendications précédentes, **caractérisé en ce qu'**un ruban stratifié (10, 22) est fourni avec un nombre multiple de m de découpes (11), sachant que la couche stratifiée (5) personnalisée et/ou individualisée est formée par une découpe du ruban stratifié (10, 22).

4. Procédé selon l'une quelconque des revendications 1 à 3, **caractérisé en ce qu'**un ruban de substitution (18, 23) est fourni avec un nombre multiple de k de découpes, sachant que la couche de substitution est réalisée sous la forme d'une découpe du ruban de substitution (18, 23).

5. Procédé selon la revendication 3, **caractérisé en ce qu'**une isolation de la découpe (11) du ruban stratifié (10, 22) est effectuée sur une découpe (8) de la bande d'incrustation (6) avant ou au cours de la mise en place d'une découpe (11) du ruban stratifié (10, 22).

6. Procédé selon la revendication 4, **caractérisé en ce qu'**une isolation de la découpe du ruban de substitution (18, 23) est effectuée sur une découpe (8) du ruban d'incrustation (6) au cours de la mise en place d'une découpe du ruban de substitution (18, 23).

7. Procédé selon l'une quelconque des revendications 1 à 6, **caractérisé en ce qu'**une première couche stratifiée (5) personnalisée et/ou individualisée et une autre couche stratifiée personnalisée et/ou individualisée sont mises en place sur la couche d'incrustation (4) ou sur le composite contenant la couche d'incrustation (4) exclusivement lorsque la capacité de fonctionnement de la couche d'incrustation (4) est de mise, sachant que la première couche stratifiée (5) personnalisée et/ou individualisée est réalisée sous la forme d'une couche stratifiée imprimée et que l'autre couche stratifiée personnalisée et/ou individualisée est réalisée sous la forme d'un composite de couches holographiques prêt à être stratifié.

8. Procédé selon l'une quelconque des revendications précédentes, **caractérisé en ce que** le composite de couches se formant après la mise en place de la couche stratifiée (5) personnalisée et/ou individualisée au moins au nombre de une ou de la couche de substitution au moins au nombre de une est stratifié.

9. Procédé selon l'une quelconque des revendications précédentes, **caractérisé en ce qu'**une découpe finale sur un format final est estampée du composite de couches non stratifié ou stratifié se formant après la mise en place de la couche stratifiée (5) au moins au nombre de une ou de la couche de substitution au moins au nombre de une.

10. Dispositif servant à fabriquer un produit de sécurité (1) multicouche, sachant que le dispositif présente au moins un système servant à fournir une couche d'incrustation (4) ou un composite de couches contenant la couche d'incrustation (4) et au moins un système servant à mettre en place une couche stratifiée (5) personnalisée et/ou individualisée,
sachant
que le dispositif présente au moins un système (15) servant à contrôler la capacité de fonctionnement de la couche d'incrustation (4), sachant que le système servant à mettre en place la couche stratifiée (5) personnalisée et/ou individualisée est relié de telle manière au système (15) servant à contrôler que la couche stratifiée (5) personnalisée et/ou individualisée au moins au nombre de une peut être mise en place sur la couche d'incrustation (4) ou sur le composite de couches contenant la couche d'incrustation (4) exclusivement lorsque la capacité de fonctionnement est de mise,
**caractérisé en ce**
**qu'**une couche de substitution peut être mise en place sur la couche d'incrustation (4) ou sur le composite de couches contenant la couche d'incrustation (4) lorsque la capacité de fonctionnement n'est pas de mise.
